Europäisches Patentamt

European Patent Office

Office européen des brevets

(19)

(11) Veröffentlichungsnummer: **0 014 219**
**B1**

(12) **EUROPÄISCHE PATENTSCHRIFT**

(45) Veröffentlichungstag der Patentschrift: 28.04.82

(51) Int. Cl.³: **B 62 D 1/18**

(21) Anmeldenummer: **79100275.1**

(22) Anmeldetag: **31.01.79**

(54) Sicherheitslenksäule für Kraftfahrzeuge.

| | |
|---|---|
| (43) Veröffentlichungstag der Anmeldung: **20.08.80 Patentblatt 80/17** | (73) Patentinhaber: **Daimler Benz Aktiengesellschaft** **Postfach 202** **D-7000 Stuttgart 60 (DE)** |
| (45) Bekanntmachung des Hinweises auf die Patenterteilung: **28.04.82 Patentblatt 82/17** | (72) Erfinder: **Selzer, Harald, Dipl.-Ing.** **Tiefenbacherstrasse 67** **D-7000 Stuttgart 61 (DE)** |
| (84) Benannte Vertragsstaaten: **DE** | |
| (56) Entgegenhaltungen: **DE - A - 2 540 538** **DE - A - 2 630 097** **DE - A - 2 649 962** **DE - B - 1 269 907** **FR - A - 2 162 741** **US - A - 3 424 263** **US - A - 3 760 649** | |

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Sicherheitslenksäule für Kraftfahrzeuge

Die Erfindung betrifft eine Sicherheitslenksäule für Kraftfahrzeuge nach dem Oberbegriff von Anspruch 1, wie sie beispielsweise aus der FR—A—21 62 741 oder der DE—A—26 49 962 als bekannt hervorgeht.

Der unnachgiebig am Fahr-p-zeugaufbau gelagerte Lenkwellenabschnitt sowie die sich zum Motorraum hin in Richtung auf das Lenkgetriebe daran anschließende geteilte Zwischenwelle halten Verlagerungen der Getriebeeingangswelle bei unfallbedingter Verstauchung der Vorderpartie des Fahrzeuges vom Innenraum des Fahrzeuges und von den Passagieren fern. Energieverzehrende Wellenelemente zwischen dem Lenkgetriebe und dem festgelagerten Wellenabschnitt sind nicht nötig. Zur Milderung des Sekundäraufpralles des Fahrers auf das Lenkhandrad sind zwischen dem Lenkhandrad und dem unnachgiebig gelagerten Lenkwellenabschnitt Pralltöpfe oder energieverzehrende Hohlwellen oder dergleichen angeordnet, wobei die durch den Aufprall in den oberen Teil der Lenksäule eingeleiteten Kräfte an der unnachgiebigen Lagerstelle in den Fahrzeugaufbau abgeleitet werden. Die im unteren Teil der Sicherheitslenksäule befindliche geteilte Zwischenwelle braucht — wie gesagt — keine Stoßenergie zu absorbieren, sie soll lediglich wirksam Annäherungen und Winkelverlagerungen der Getriebeeingangswelle des Lenkgetriebes bei Unfällen von dem oberen Teil der Sicherheitslenksäule fernhalten. Hierzu ist die sich selbsttätig lösende Kupplung vorgesehen.

Bei der Kupplung nach der FR—A—21 62 741 ist das eine Wellenteilende gabelförmig geschlitzt, während das entsprechende andere Wellenteilende einen in den Schlitz mit großem Spiel eingreifenden, flachen Zinken aufweist. Die axialen Stirnflächen der Gabelenden und des Zinkens sind abgeschrägt, so daß bei axialer Annäherung die ineinandergestrekten Wellenteilenden seitlich aneinander vorbeigleiten. Die beiden ineinandergesteckten Wellenteilenden werden durch einen hülsenartigen Überzug zusammengehalten, der aus leichtzerstörbarem Weichplastik besteht und der um die vormontierten Wellenteilenden umspritzt oder umgossen wird, wobei Plastikmaterial auch in das Spiel zwischen den Gabelzinken gelangt. Nachteilig hieran ist, daß durch das eingespritzte Plastik auch zwischen drehmoment-übertragenden Flächen die Lenksäule gegen Verdrehkräfte weich und nachgiebig wird. Dadurch kommt mit zunehmendem Alter ein unzulässig hohes Spiel in die Lenkübertragung. Wollte man diese Kupplung so umgestalten, daß das Verdrehspiel beseitigt ist, so müßte die Kupplung im Durchmesser sehr groß ausgebildet werden, was ebenfalls unerwünscht ist. Nachteilig an dieser bekannten Kupplung ist ferner, daß der hülsenartige Überzug bei einer unfallbedingten Annäherung der Kupplungsteile radial gesprengt werden muß, wozu eine sehr große Kraft erforderlich ist. Wird der äußere Überzug entsprechend weich gemacht, so wirkt sich dieses wiederum auf die Weichheit der Lenkung aus. Wird der Überzug recht dünnwandig gemacht, so kann dieser bei Montagearbeiten in der Nähe der Sicherheitslenksäule leicht versehentlich zerstört werden. Letzteres gilt in gleichem Maße auch für die Kupplung nach der DE—A—26 49 962, die ebenfalle eine aus Kunststoff bestehende Hülse zum Zusammenhalten der abgeschrägten Wellenteilenden aufweist.

In der DE—C—1 927 173 ist eine Steckkupplung mit axial verlaufenden drehmomentübertragenden Stiften an dem einen Wellenteil der Zwischenwelle und einer Mitnehmerplatte an dem anderen Wellenteil vorgesehen, in die die Stifte hineinragen. Der eine der beiden Wellenteile ist im Bereich der Kupplung Z-förmig zur Seite abgekröpft, so daß sich die beiden Kupplungshälten hakenförmig umgreifen können. Bei Annäherung der beiden Wellenteile können die Stifte aus der Mitnehmerplatte axial herausgleiten und die Kupplungshälften gelangen außer Eingriff. Nach dem Lösen der beiden Kupplungshälften sind die beiden Wellenteile seitlich freibeweglich und eine unfallbedingte weitere Verlagerung des Lenkgetriebes und des damit verbundenen unteren Wellenteiles der Zwischenwelle bleibt rückwirkungsfrei auf den oberen Teil der Sicherheitslenksäule. Nachteilig an dieser Konstruktion ist, daß die sich selbsttätig lösende Kupplung sowie der seitlich abgekröpfte Wellenteil relativ kompliziert aufgebaut und teuer in der Herstellung sind.

Eine andere vorbekannte Sicherheitslenksäule der in Rede stehenden Art (vgl. DE—A—2 540 538) weist eine Kupplung in der Zwischenwelle mit sehr kompliziert geformten ebenfalls abgekröpften Kupplungshälften auf, die nach Art zweier ineinanderliegender menschlicher Hände sich gegenseitig von rückwärts her umgreifen. Auch diese Kupplung ist in ihrer Herstellung relativ teuer und benötigt ausserdem sehr viel Platz; im übrigen ist die voluminöse Kupplung auch recht schwer.

Eine andere vorbekannte in der DE—C—2 315 385 beschriebene Sicherheitslenksäule weist als geteile Zwischenwelle eine normale Teleskopwelle auf, die sich zwar zusammenschieben läßt, bei der aber Winkelverlagerungen zwischen den beiden axialbeweglichen Wellenhälften nicht möglich sind. Um bei dieser sicherheitslenksäule Winkelverlagerungen des Lenkgetriebes bei unfallbedingter Annäherung des Lenkgetriebes an den Fahrgastraum gleichwohl zu ermöglichen, ist das Lenkgetriebe selber um eine horizontale, quer zur Fahrtrichtung liegende Schwenkachse schwenkbar am Fahrzeugrahmen befestigt. Diese Anordnung hat den Nachteil, daß die schwenkbare Lagerung des Lenkgetriebes am Fahrzeugrahmen zusätzliche Teile erforderlich macht, wodurch die Konstruktion ebenfalls verteuert wird. Außerdem wird die Übertragung der Bewegung vom Lenkhandrad auf die einschlagbaren Fahrzeugräder durch die bewegliche Lagerung des Lenkgetriebes schwammig. Auch an den dortigen Gelenkstellen sind zur Vermeidung von Verschleiß und zur Dämpfung von Schwingungen gummielastische Zwischenlagen einzubauen, die gerade an solchen Stellen liegen, an denen besonders hohe Drehmomente auftreten. Durch die Schwenkbarkeit des Lenkgetriebes ist außerdem die Möglichkeit eines seitlichen Ausweichens der Getriebeeingangswelle nur in einer einzigen, nämlich in einer vertikalen Ebene gegeben. Anzustreben ist aber eine Ausweichmöglichkeit nach allen Richtungen.

Bei einer weiteren vorbekannten Sicherheitslenksäule (vgl. DE—A—2 535 812) ist eine ungeteilte Zwischenwelle mit einer Sollnickstelle vorgesehen; es handelt sich dabei um eine vorgeknickte Welle, bei der der Wellenknick beim Verdrehen der Lenkwelle auf einem relativ großen Hüllkreis mit umläuft. Diese Ausgestaltung hat deswegen zum einen den Nachteil, daß der erforderliche Einbauraum relativ groß ist. Nachteilig ist ferner, daß beim Unfall vom Lenkgetriebe Knickkräfte nach rückwärts auf den festgelagerten Lenkwellenabschnitt übertragen werden. Das seitliche Ausknicken der Zwischenwelle kann je nach Umfangslage der Lenkwelle und je nach Relativlage der Einzelteile im Motorraum beim Unfall auch einmal durch starre im Wege stehende Motorteile behindert werden, so daß trotz der Sollknickstelle das seitliche Ausknicken nicht oder nur mit großer Verzögerung erfolgt und dementsprechend hohe Stroßkräfte auf den festgellaterten Lenkwellenabschnitt vom Motorraum her einwirken. Im übrigen macht die genannte Art der Ausbildung der Zwischenwelle die Anordnung von Wellengelenken an beiden Enden der Zwischenwelle erforderlich, wodurch die Konstruktion eben falls verteuert wird.

Aufgabe der Erfindung ist es, die zugrundegelegte Sicherheitslenksäule dahingehend zu verbessern, daß die Kupplung in der Zwischenwelle sich beim Unfall bei geringer Axialkraft selbsttätig löst, möglichst einfach und billig und im Platzbedarf möglichst klein gestaltet ist, daß sie im Normalbetrieb spielfrei arbeitet und daß ein seitliches Ausweichen der entkuppelt Wellenteile der Zwischenwelle behinderungsfrei möglich ist.

Diese Aufgabe wird erfindungsgemäß durch die kennzeichnenden Merkmale von Anspruch 1 gelöst. Die Kupplung der Zwischenwelle ist als Bandagierkupplung ausgebildet, die durch Wegschieben der Bandagierung der gekuppelten überlappten Wellenenden diese in radialer Richtung völlig freilegt, so daß sie radial beliebig ausweichen können. Zum Wegschieben der Bandagierung wird eine beginnende Stauchung der Sicherheitslenksäule beim Unfall ausgenützt.

Der Vorteil einer solchen Ausgestaltung liegt darin, daß die Kupplung in der Zwischenwelle besonders einfach und leicht und besonders klein in ihren Abmessungen ausgestaltet werden kann.

Vorteilhafte Weiterbildungen der Erfindung sind in dem Unteransprüchen aufgeführt.

Die Erfindung ist anhand zweier in den Zeichnungen dargestellter Ausführungsbeispiele nachfolgend noch kurz erläutert; dabei zeigen:

Fig. 1 ein erstes Ausführungsbeispiel einer Sicherheitslenksäule nach der Erfindung in Seitendarstellung im normalen Zustand,

Fig. 2 eine Einzelheit aus der Sicherheitslenksäule nach Fig. 1 in vergrößertem Maßstab umfassend die Zwischenwelle mit der Kupplung darin,

Fig. 3 einen Querschnitt durch die Zwischenwelle nach Fig. 2 entlang dem Linienzug III—III,

Fig. 4 ein Einzelteil aus der Zwischenwelle nach Fig. 2,

Fig. 5 die gleiche Sicherheitslenksäule wie in Fig. 1 in einem zusammengeschobenen Zustand nach einem Unfall und

Fig. 6 den Längsschnitt durch ein weiteres Ausführungsbeispiel einer Zwischenwelle einer Sicherheitslenksäule nach der Erfindung.

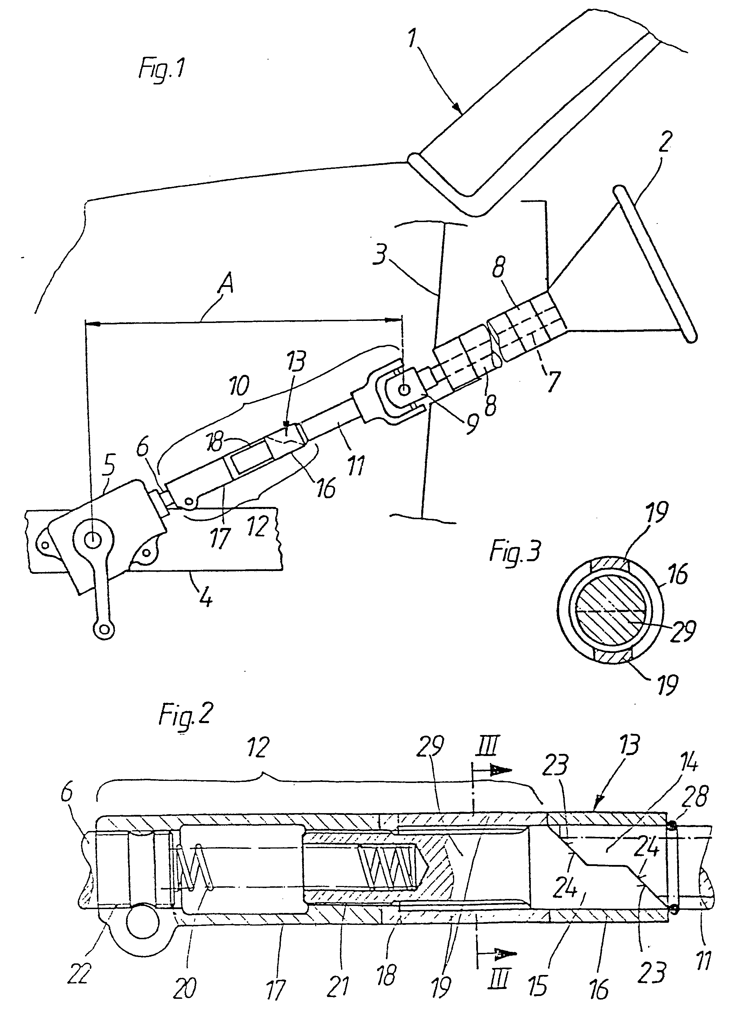

In dem andeutungsweise dargestellten Kraftfahrzeug 1 ist eine sicherheitslenksäule angeordnet, die sich zwischen dem Lenkhandrad 2 und dem am Fahrzeugrahmen 4 befestigten, Lenkgetriebe 5 erstreckt. Sie weist einen am Fahrzeugaufbau, beispielsweise an der Zwischen- oder Spritzwand 3 zwischen dem Motorraum und dem Fahrgastraum des Fahrzeuges unnachgiebig befestigten Lenkwellenabschnitt 7 auf, der in ortsfesten Lagern 8 gelagert ist. Zwischen der Eingangswelle 6 des Lenkgetriebes und dem genannten Lenkwellenabschnitt 7 ist eine zweiteiligen Zwischenwelle 10 angeordnet, die mit dem Lenkwellenabschnitt 7 über ein als Kardangelenk ausgebildetes Wellengelenk verbunden ist. Die Zwischenwelle 10 besteht aus zwei Wellenteilen 11 und 12, die über eine bei unfallbedingter Annäherung der Wellenteile sich selbsttätig lösende Kupplung 13 miteinander verbunden sind. Im dargestellten Ausführungsbeispiel ist der untere dem Lenkgetriebe 5 zugekehrte Wellenteil 12 mehrteilig ausgebildet und enthält die zum Lösen der Kupplung 13 erforderlichen Einrichtungen. Bei dem in Fig. 1 dargestellten Normalzustand der Sicherheitslenksäule beträgt der in Fahrtrichtung des Fahrzeuges gemessene horizontale Abstand zwischen Kardangelenk und Mittelpunkt der lenkstockwelle das Maß A. Die Sicherheitslenksäule selber ist im wesentlichen gestreckt.

Die Zwischenwelle 10 weist die beiden Wellenteile 11 und 12 auf, wobei der obere Wellenteil 11 lediglich als einfaches Rohrstück ausgebildet ist, dessen in der Kupplung 13 liegendes Ende 14 in bestimmter Weise zugerichtet ist. Der andere mehrteilig aufgebaute Wellenteil 12 umfaßt eine Übergangshühlse 17 sowie ein axial darin bewegliches verdrehfest mitgenommenes Wellenteilstück 29, die über eine verschiebbare Kerbverzahnung 21 miteinander verbunden sind. Die Übergangshülse 17 ist ebenfalls über eine Kerverzahnung 22 mit der Eingangswelle 6 des Lenkgetriebes unbeweglich verbunden; die Kerbverzahnung 22 kann mit einer tangentialliegenden Verschraubung über einen Radialschlitz verspannt werden. Die beiden einander zugekehrten Enden 14 und 15 der Wellenteile 11 bzw. 12 sind im Querschnitt halbkreisförmig konturiert; sie bilden gemeinsam einen Vollkreisquerschnitt. Über die formschlüssig sich überlappenden Enden 14 und 15 der Wellenteile ist eine Bandagierhülse 16 drübergeschoben, die die Wellenteilenden mit festem Schiebesitz spielfrei zusammenhält. Dadurch kömen hohe Drehmomente spielfrei zwischen den beiden Wellenteilen der Zwischenwelle übertragen werden. Im Anschluß an die halbkreisförmige Konturierung der Wellenenden sind jeweils beiderseits Abweisflächen 23 bzw. 24 vorgesehen, die in Falle einer Entfernung der Bandagierhülse und einer anhaltenden Stauchung der Sicherheitslenksäule ein radiales Voneinanderabgleiten der Wellenteilenden begünstigen sollen. Die Bandagierhülse 16 erstreckt sich über die Länge der prismatischen halbkreisförmigen Gestaltung der Wellenteilenden einschließlich der axialen Erstreckung der Abweisflächen 23 und 24.

Das Wellenteilstück 29 ist um wenigstens etwa die axiale Erstreckung der Bandagierhülse 16 innerhalb der Übergangshülse 17 axial verschiebbar. Jedoch ist im Normalzustand das Wellenteilstück 29 durch eine im Innern der Übergangshülse 17 bzw. in einer Bohrung im Wellenteilstück angeordneten Feder in Richtung auf die Kupplung 13 gespannt, so daß diese Kupplung stets spiel- und Klapperfrei geschlossen ist. Der obere Wellenteil 11 ist axial unverrückbar seitens des Lenkwellenabschnittes 7 über das Wellengelenk 9 gehalten.

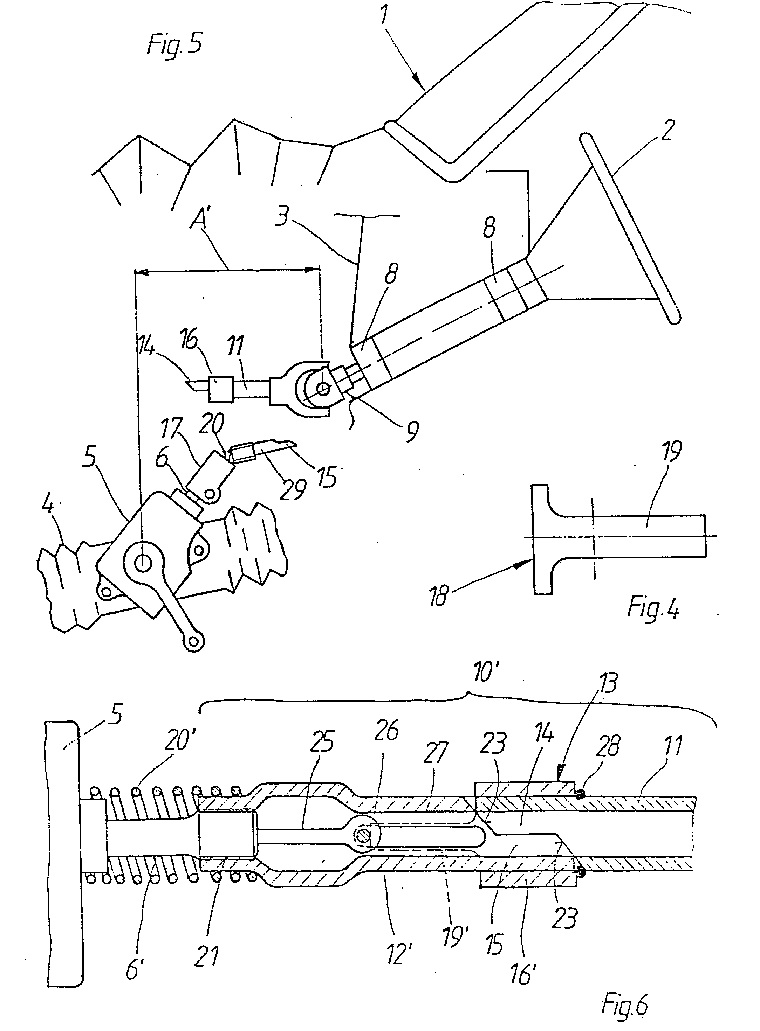

Die Bandagierhülse 16 ist beidseitig axial gesichert. Und zwar ist ein Ausweichen nach unten durch eine Stößelhülse 18 verhindert, die in Fig. 4 einzeln in Ansicht und in Fig. 3 im Querschnitt gezeigt ist. Sie besteht im wesentlichen aus einem kleinen Ring, an dem an zwei diametral gegenüberliegenden Stellen zwei sehr lange Distanzierungszungen 19 angebracht sind. Die Stößelhülse 18 erstreckt sich zwischen der Stirnseite der Übergangshülse 17 und der unteren Stirnkante der Bandagierhülse 1. Ein Ausweichen der Bandagierhülse nach oben ist durch einen in eine Umfangsrille des oberen Wellenteiles eingespannten Gummiring von kreisförmigem Querschnitt verhindert.

Die Wirkungsweise der selbstlösenden Kupplung in der Zwischenwelle ist nun kurz folgende: Bei einer unfallbedingten Stauchung der Sicherheitslenksäule wird sich das Wellenteilstück in die Übergangshülse 17 hineinschieben, weil an dieser Stelle eine Stauchung behinderungsfrei möglich ist. Hierbei ist lediglich die Kraft der Spannfeder 20 zu überwinden. Durch das Eintauchen des Wellenteilstückes 29 in die Übergangshülse 17 nähert sich die obere Stirnkante der Ubergangshülse der Kupplung 13 an. Dabei schiebt die Übergangshülse mittels der Stößelhülse 18 die Bandagierhülse 16 von den beiden überlappten Wellenenden 14 und 15 axial herunter, wobei der Gummiring 28 aus der Umfangsrille herausgehoben oder abgeschert wird. Die mögliche Eintauchtiefe des Wellenteilstückes 29 in die Übergangshülse 17 ist so bemessen, daß die Bandagierhülse 16 völlig aus dem Bereich der Kupplung herausgeschoben werden kann. Nach Durchmessen dieser ersten Stauchzome ist die Kupplung 13 selbsttätig gelöst, so daß die Wellenenden 14 und 15 — gegebenenfalls, daß heißt bei entsprechender Umfangslage der Distanzierungszungen 19 unter Aufbiegung dieser radial biegeweichen Zungen — radial völlig frei sind und seitlich behinderungsfrei ausweichen könnens. Es ist nun eine weitere Annäherung des Lenkgetriebes 15 an den oberen Lenkwellenabschnitt 7 der Sicherheitslenksäule ohne weiteres und rückwirkungsfrei möglich; die Sicherheitslenksäule ist völlig getrennt. Dieser Zustand ist in Figur 5 dargestellt, bei dem der horizontale Abstand zwischen Kardangelenk und Lenkstockwelle sich auf das Maß A' verkürzt hat.

Bei dem in Fig. 6 dargestellten weiteren Ausführungsbeispiel einer Zwischenwelle sind für gleiche Teile gleiche Bezugszeichen und für ähnliche aber funktionsgleiche Teile entsprechende mit einem hochgestellten Strich versehene Bezugszeichen versehen, so daß weitgehend auf die voraufgegangene Beschreibung verwiesen werden kann. Nachfolgend soll nur noch kurz auf die Unterschiede eingegangen werden.

Bei dem in Fig. 6 dargestellten Ausführungsbeispiel einer Zwischenwelle ist der untere Wellenteil 12' der Zwischenwelle 10' rohrförmig aber einstückig ausgebildet, der unmittelbar über eine axialverschiebbare Kerbverzahnung 21 mit der etwas länger vorstehenden Getriebeeingangswelle 6' in Verbindung steht Der Wellenteil 12' läßt sich um etwa die axiale Erstreckung der Bandagierhülse 16' auf die Getriebeeingangswelle 6' axial drüberschieben, wobei das kerbverzahnte Wellenende der Getriebeeingangswelle in eine Erweiterung des Wellenteiles 12' eintaucht. Die Spannfeder 20' ist auf der Außenseite des Wellenteiles 12' angeordnet und stüzt sich am Gehäuse des Lenkgetriebes 5 ab. Im Innern des rohrförmigen Wellenteiles 12' ist ein mit der Getriebeeingangswelle 6' verbundener Strößel 25 angeordnet, der über einen Querbolzen 26, welcher sich durch ein Paar von axial sich erstreckenden Langlöchern 27 auf die Außenseite des Wellenteiles 12′ erstreckt, mit Distanzierungszungen 19′ der Bandagierhülse 16′ in Verbindung steht. Die Stirnseiten der Distanzierungszungen liegen nur lose an den überstehenden Enden des Querbolzens an. Die Stößelverbindung zwischen der Bandagierhülse 16′ und der Getriebeeingangswelle 6′ erfolgt also teilweise durch das Innere des rohrförmigen Wellenteiles 12′. Auch bei dieser Ausgestaltung wird durch eine beginnende Stauchung der Sicherheitslenksäule die Bandagierhülse 16′ über die Stösselverbindung von der Kupplung 13 axial heruntergeschoben und damit die Kupplung gelöst und die Wellenenden 14 und 15 radial freigelegt.

Anstelle des Kardangelenkes 9 kann auch ein Wellengelenk anderer Bauart oder eine elastische Kupplung vorgesehen sein. Bei sehr großem Abstand zwischen Lenkgetriebe und Lenkwellenlager 8 kann der obere Teil der — sehr langen — "Zwischenwelle" auch einstücking mit dem fest gelagerten Lenkwellenabschnitt 7 verbunden sein. Die Biegeelastizität einer solchen schlanken langen Welle reicht unter Umständen schon alleine aus, um ein seitliches Ausweichen des oberen an der Kupplung 13 zusammengekuppelten Wellenendes im Crash-Fall in ausreichendem Ausmaß zu ermöglichen. Das Wellengelenk ist dann gewissermaßen in einer bewußt vorgesehenen elastischen Biegeweichheit zu sehen.

Anstelle des Gummiringes 28 kann auch ein an einer Umfangsstelle offener Sprengring aus Federdraht verwendet werden. Dabei ist jedoch zur einseitigen Begrenzung der Axialkraft auf niedrige Werte die Umfangsnut unsymetrisch zu gestalten. Und zwar wird die dem Lenkwellenabschnitt 7 zugekehrte obere Nutflanke nach Art eines schlanken Kegels geformt sein, derart, daß sich der Sprengring mit mäßiger Axialkraft unter Aufweitung des Sprengringes aus der Sicherungsnut nach oben schieben läßt.

**Patentansprüche**

1. Sicherheitslenksäule für Kraftfahrzeuge mit einem am Fahrzeugaufbau unnachgiebig gelagerten, vom Lenkhandrad (2) antreibbaren Lenkwellenabschnitt (7), einem am Fahrzeugrahmen befestigten Lenkgetriebe (5), dessen Eingangswelle (6) wenigstens in grober Annäherung in einer Flucht mit dem Lenkwellenabschnitt (7) liegt sowie mit einer Zwischenwelle (10, 10′) zwischen der Eingangswelle (6) und dem Lenkwellenabschnitt (7), die mit dem Lenkwellenabschnitt (7) vorzugsweise über ein Wellengelenk (9) verbunden ist und welche eine bei — unfallbedingter — axialer Annäherung der Eingangswelle (6) an den Lenkwellenabschnitt (7) sich selbsttätig lösende Kupplung (13) enthält, derart, daß die entkuppelten Wellenteile (11, 12, 12′) der Zwischenwelle (10, 10′) wenigstens in Grenzen frei seitlich ausweichen können, welche Kupplung (13) durch formschlüssig aufeinanderliegendes Überlappen der einander zugekehrten Enden (14, 15) der beiden Wellenteile (11, 12, 12′) und Bandagieren der überlappten Wellenteilenden (14, 15) mittels einer verschiebbaren aber axial gesicherten Bandagierhülse (16, 16′) gebildet ist, wobei die Wellenteilenden (14, 15) mit einer des seitliche Ausweichen begünstigenden Konturformgebung (23, 24) versehen sind, dadurch gekennzeichnet, daß einer der beiden Wellenteile (11, 12, 12′) gegenüber dem angrenzenden Lenkwellenabschnitt (7) bzw. der Eingangswelle (6, 6′) umfangsmäßig fixiert, aber wenigstens etwa um die axiale Länge der Bandagierhülse (16, 16′) axial relativ verschiebbar ist, und daß eine die axiale Relativlage der Bandagierhülse (16, 16′) aufrechterhaltende Stößelverbindung oder dergleichen (18, 19 oder 25, 26, 27, 19′) zwischen dem angrenzenden lenkwellenabschnitt (7) bzw. der Eingangswelle (6, 6′) zum einen und der Bandagierhülse (16, 16′) zum anderen vorgesehen ist, um die letztere bei — unfallbedingter — Stauchung der Sicherheitslenksäule gewaltsam, vorzugsweise unter Überwindung eines Sicherungselementes (28), axial über die Kupplung (13) wegzuschieben, so daß die Wellenteilenden (14, 15) seitlich im wesentlichen behinderungsfrei ausweichen können.

2. Sicherheitslenksäule nach Anspruch 1, dadurch gekennzeichnet, daß der Einbaulage untere dem Lenkgetriebe (5) zugekehrte Wellenteil (12, 12′) der Zwischenwelle (10, 10′) axialbeweglich gegenüber der Eingangswelle (6, 6′) des Lenkgetriebes (5) ist.

3. Sicherheitslenksäule nach Anspruch 1 oder 2, dadurch gekennzeichnet, daß der axialbewegliche Wellenteil (12, 12′) der Zwischenwelle (10, 10′) axial durch Federkraft (20, 20′) in Richtung auf die Kupplung (13) der Zwischenwelle (10, 10′) gespannt ist.

4. Sicherheitslenksäule nach Anspruch 1, 2 oder 3, dadurch gekennzeichnet, daß die im Querschnitt jeweils etwa nach einem Halbkreis konturierten gemeinsam einen Vollkreis bildenden formschlüssig überlappten Wellenden (14, 15) der Wellenteile (11, 12, 12′) der Zwischenwelle (10, 10′) jeweils außerhalb der Überlappung auf einen vollen Kreisquerschnitt entsprechend der das Ausweichen begünstigenden Konturformgebung übergehen, wobei dieser Übergang von dem Halbkreisauf den Vollkreisquerschnitt jeweils entlang einer zu Längsachse geneigten Abweisfläche (23) erfolgt.

5. Sicherheitslenksäule nach Anspruch 4, dadurch gekennzeichnet, daß an dem der Stirnseite der überlappten Wellenenden (14, 15) zugekehrten Bereich ebenfalls jeweils eine entsprechende Abweisfläche (24) vorgesehen ist.

6. Sicherheitslenksäule nach einem der Ansprüche 1 bis 5, dadurch gekennzeichnet, daß die axiale Sicherung der Bandagierhülse (16, 16′) einerseits durch die Stößelverbindung (18, 19 oder 25, 26, 27, 19′) und andererseits durch einen in eine Umfangsrille des entsprechenden Wellenteiles (11) eingelegten Gummiring (28) von kreisförmigem Querschnitt bewirkt ist.

7. Sicherheitslenksäule nach einem der Ansprüche 1 bis 6, dadurch gekennzeichnet, daß an der Bandagierhülse (16′) an zwei diametral gegenüberliegenden Stellen Jeweils eine axial sich erstreckende Distanzierungszunge (19′) als Teil der Strößelverbindung (25, 26, 27, 19′) vorgesehen ist.

## Claims

1. A safety steering column for motor vehicles with a steering shaft section (7) mounted rigidly on the vehicle body and driven by means of the steering wheel (2), and with a steering gear box (5) attached to the vehicle frame whose input shaft (6) is at least roughly in line with both the steering shaft section (7) and an intermediate shaft (10, 10′) located between the input shaft (6) and steering shaft section (7), this intermediate shaft being linked to the steering shaft section (7) preferably by means of a universal joint (9) and incorporating a coupling (13) which — following a collision where the input shaft (6) axially approaches the steering shaft section (7) — automatically releases in such a way that the disengaged shaft segments (11, 12, 12′) of the intermediate shaft (10, 10′) are free to deflect to the side at least within limits, the coupling (13) being formed by the form-locking overlap of the facing ends (14, 15) of the two shaft segments (11, 12, 12′) and the bandaging of these overlapped ends (14, 15) by means of a sliding but axially secured bandaging sleeve (16, 16′), whereby the shaft segment ends (14, 15) are shaped (23, 24) so as to assist lateral movement, of a kind in which one of the two shaft segments (11, 12, 12′) is circumferentially fixed in relation to the adjacent steering shaft section (7) or input shaft (6, 6′) but can slide relatively in axial direction for a distance at least approximately equivalent to the axial length of the bandaging sleeve (16, 16′), and wherein a pushrod connection or similar (18, 19 or 25, 26, 27, 19′) maintaining the relative axial position of the bandaging sleeve (16, 16′) is provided between the adjacent steering shaft section (7) or input shaft (6, 6′) on the one hand and the bandaging sleeve (16, 16′) on the other so that the latter — when the steering column is compressed in an accident — is forcefully moved in axial direction over the coupling (13), preferably after first overcoming a safety element (28), in such a way that the shaft segment ends (14, 15) are essentially free to deflect.

2. A safety steering column as defined in claim 1, wherein the shaft segment (12, 12′) of the intermediate shaft (10, 10′) which, when installed, is the lower of the two shaft segments (11, 12, 12′) and faces the steering gear box (5) can move axially in relation to the input shaft (6, 6′) of the steering gear box (5).

3. A safety steering column as defined in claim 1 or 2, wherein the axially movable shaft segment (12, 12′) of the intermediate shaft (10, 10′) is subjected to an axial spring load (20, 20′) directed towards the coupling (13) of the intermediate shaft (10, 10′).

4. A safety steering column as defined in claim 1, 2 or 3, wherein the form-locking overlapped shaft ends (14, 15) of the shaft segments (11, 12, 12′) of the intermediate shaft (10, 10′) in cross section each resemble a semicircle and form a full circle when joined, and each transfer to a full circular cross section beyond the overlap area in accordance with the shaping designed to assist deflection, whereby this transition from the semicircular to the full circular cross section occurs in each case along a deflecting surface (23) inclined to the longitudinal axis.

5. A safety steering column as defined in claim 4, wherein a corresponding deflecting surface (24) is similarly provided for each area opposing the front face of each overlapped shaft end (14, 15).

6. A safety steering column as defined in one of the claims 1 to 5, wherein the bandaging sleeve (16, 16′) is axially secured on the one hand by the pushrod connection (18, 19 or 25, 26, 27, 19′) and on the other hand by a rubber ring (28) of circular cross section inserted in a circumferential groove in the appropriate shaft segment (11).

7. A safety steering column as defined in one of the claims 1 to 6, wherein a spacing tongue (19′) extending in axial direction is provided at each of two diametrically opposed points on the bandaging sleeve (16′) as part of the pushrod connection (25, 26, 27, 19′).

## Revendications

1. Colonne de direction de sécurité pour véhicules automobiles, avec un tronçon d'arbre de direction (7) logé rigidement dans la superstructure du véhicule et entraînable par le volant de direction (2), un mécanisme de direction (5) fixé au cadre du véhicule et dont l'arbre d'entrée (6) se trouve au moins approximativement dans l'alignement du tronçon d'arbre de direction (7) ainsi qu'un arbre intermédiaire (10, 10′) disposé entre l'arbre d'entrée (6) et le tronçon d'arbre de direction (7), relié au tronçon d'arbre de direction (7) de préférence par une articulation d'arbre (9) et qui comporte un accouplement (13) à découplage automatique se produisant au cas où — en raison d'un accident — l'arbre d'entrée (6) se rapproche axialement du tronçon d'arbre de direction (7), découplage s'effectuant de telle sorte que les parties désaccouplées (11, 12, 12′) de l'arbre intermédiaire (10, 10′) puissent dévier latéralement librement au moins dans certaines limites, l'accouplement (13) étant constitué par le recouvrement mutuel des extrémités se faisant face (14, 15), rendues ainsi solidaires par forme,

**0014219**

des deux parties d'arbre (11, 12, 12') et le frettage des extrémités de parties d'arbre (14, 15) se recouvrant assuré par une frette (16, 16') déplaçable mais arrêtée dans le sens longitudinal, les extrémités de parties d'arbre (14, 15) accusant une forme de contour (23, 24) qui favorise la déviation latérale, réalisation caractérisée par le fait qu'une des deux parties d'arbre (11, 12, 12') est positionnée à la périphérie par rapport au tronçon avoisinant d'arbre de direction (7) ou à l'arbre d'entrée contigu (6, 6'), mais relativement déplaçable axialement d'au moins environ la longueur axiale de la frette (16, 16') et qu'un assemblage à poussoir ou dispositif analogue (18, 19 ou 25, 26, 27, 19') maintenant la position relative axiale de la frette (16, 16') est prévu entre le tronçon avoisinant d'arbre de direction (7) ou l'arbre d'entrée contigu (6, 6') d'une part et la frette (16, 16') d'autre part, pour repousser de force cette dernière axialement au-dessus de l'accouplement (13) en cas de compression — consécutive à un accident — de la colonne de direction de sécurité, de préférence en surmontant la résistance d'un élément d'arrêt (28), de façon à ce que les extrémités de parties d'arbre (14, 15) puissent dévier latéralement sans entrave sensible.

2. Colonne de direction de sécurité selon revendication 1, caractérisée par le fait que la partie inférieure — en position de montage — (12, 12') de l'arbre intermédiaire (10, 10') et faisant alors face au mécanisme de direction (5) peut se déplacer axialement par rapport à l'arbre d'entrée (6, 6') du mécanisme de direction (5).

3. Colonne de direction de sécurité selon revendication 1 ou 2, caractérisée par le fait que la partie déplaçable axialement (12, 12') de l'arbre intermédiaire (10, 10') est pressée axialement par force de ressort (20, 20') en direction de l'accouplement (13) de l'arbre intermédiaire (10, 10').

4. Colonne de direction de sécurité selon revendication 1, 2 ou 3, caractérisée par le fait que chacune des extrémités (14, 15) des parties (11, 12, 12') de l'arbre intermédiaire (10, 10'), extrémités se recouvrant de façon à être solidaires par forme et dont les contours de la section transversale forment respectivement à peu près une demi-circonférence et en commun une circonférence complète, accuse en dehors du recouvrement une modification de forme l'amenant à présenter une section transversale circulaire, modification opérée selon un contour favorisant la déviation, ce passage de la section transversale semi-circulaire à la section transversale circulaire s'effectuant le long d'une surface de déviation (23) inclinée par rapport à l'axe longitudinal.

5. Colonne de direction de sécurité selon revendication 4, caractérisée par le fait que la zone se trouvant en regard de la face frontale de chacune des extrémités d'arbre (14, 15) se recouvrant présente également une surface de déviation (24) correspondante.

6. Colonne de direction de sécurité selon revendications 1 à 5, caractérisée par le fait que l'arrêt axial de la frette (16, 16') est assurée d'un côté par l'assemblage à poussoir (18, 19 ou 25, 26, 27, 19') et de l'autre côté par une bague en caoutchouc (28) de section circulaire insérée dans une gorge périphérique de la partie d'arbre correspondante (11).

7. Colonne de direction de sécurité selon revendications 1 à 6, caractérisée par le fait qu'il est prévu à chacun de deux emplacements diamètralement opposés de la frette (16') une languette d'espacement (19') disposée dans le sens axial, en tant que partie de l'assemblage à poussoir (25, 26, 27, 19').

**0014219**

Fig.1

Fig.3

Fig.2

1

0014219

Fig. 5

Fig. 4

Fig. 6

2